# EUROPEAN PATENT APPLICATION

(11) **EP 1 570 906 A1**
(43) Date of publication of application: **07.09.2005**
(21) Application number: 04100838.4
(22) Date of filing: 02.03.2004
(51) Int. Cl.: B03B 5/02, B03B 9/06

(54) **Apparatus for separating concrete components**

(71) Applicant: COLABETON S.r.l., 06020 Gubbio (IT)
(72) Inventor: Tomassini, Giancarlo, 06024 Gubbio (IT)
(74) Representative: Jorio, Paolo

(57) **Abstract**

An apparatus for separating concrete components has a substantially flat filtering element (13) which extends in a given first direction (12), has a number of openings (14) for filtering first liquid-phase components and second solid-phase components, and vibrates in a given second direction (18); the first and second direction (12, 18) forming an angle (b) of other than 0° and 90°, so as to feed third solid-phase components in the first direction (12) and along the filtering element (13).

## Description

The present invention relates to an apparatus for separating concrete components.

Concrete normally comprises first liquid-phase components, usually water; second solid-phase components, usually cement and relatively small-size aggregate; and third solid-phase components, usually relatively large-size aggregate.

In concrete production, an apparatus for separating concrete components is known comprising a vessel which extends in a direction sloping with respect to the ground, and has a bottom end where the concrete is fed into the vessel, and a top end.

The apparatus also comprises a separating screw which is mounted for rotation inside the vessel with the interposition of a pair of rolling bearings, rotates about a respective longitudinal axis substantially parallel to said direction, and feeds the third concrete components from said bottom end to said top end, where the third components are unloaded from the vessel; and a draw pipe for feeding the first and second components from the bottom end of the vessel into a tank.

A major drawback of known apparatuses of the above type is relatively high running cost, on account of the screw only being permitted to stop for a relatively short time, at least no longer than a given time over and above which the concrete on the screw tends to set, thus making it necessary to change the screw.

Known apparatuses of the above type also require relatively frequent lubrication of the rolling bearings.

It is an object of the present invention to provide an apparatus for separating concrete components, designed to eliminate the aforementioned drawbacks, and which is cheap and easy to produce.

According to the present invention, there is provided an apparatus for separating concrete components, the apparatus being characterized by comprising a substantially flat filtering element extending in a given first direction and having a number of openings for filtering first liquid-phase components and second solid-phase components; and actuating means for imparting to said filtering element a vibratory movement in a given second direction; said first and said second direction forming a first angle of other than 0° and 90°, so as to feed the third solid-phase components in said first direction and along the filtering element.

A non-limiting embodiment of the present invention will be described by way of example with reference to the accompanying drawings, in which:
Figure 1 shows a schematic side view, with parts in section and parts removed for clarity, of a preferred embodiment of the apparatus according to the present invention;
Figure 2 shows a larger-scale, schematic side view, with parts in section and parts removed for clarity, of the Figure 1 apparatus;
Figure 3 shows, schematically, the operating principle of the Figure 1 and 2 apparatus.

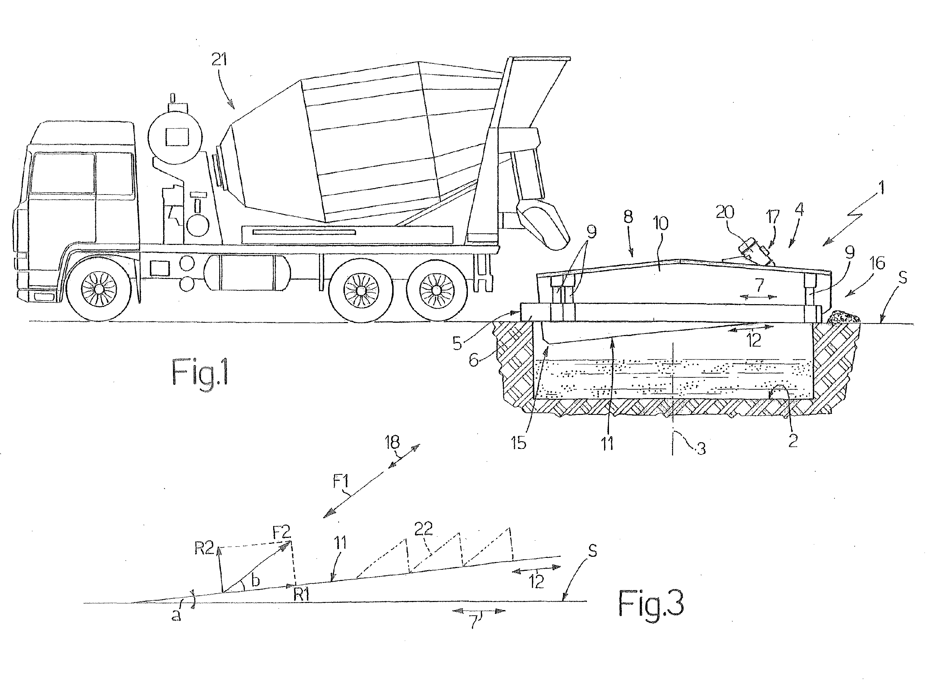

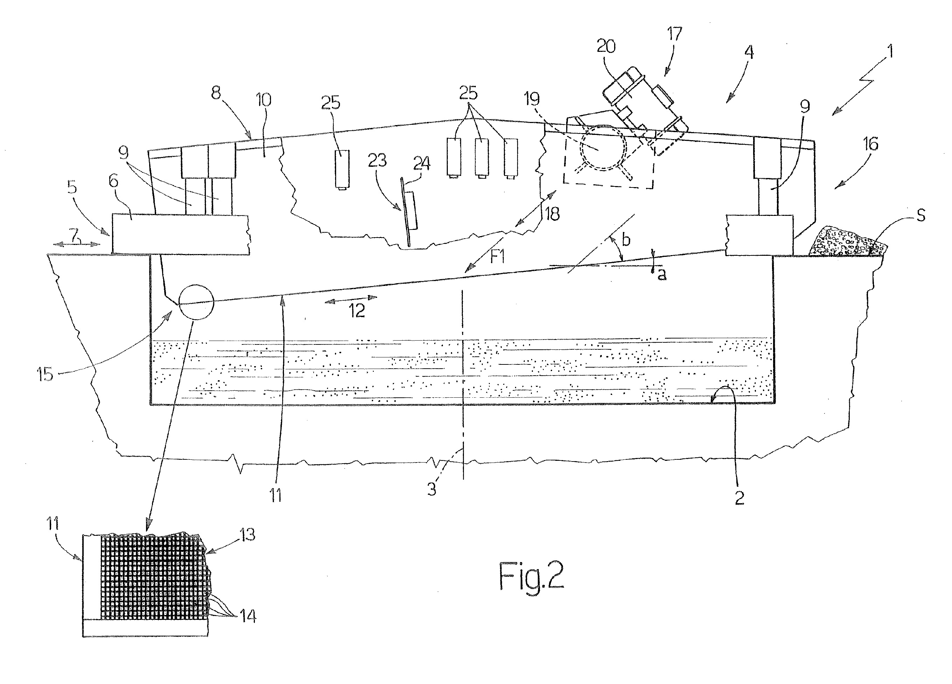

Number 1 in Figures 1 and 2 indicates as a whole an apparatus for separating concrete components, which comprise at least one liquid-phase component - in the example shown, water; and a number of solid-phase components - in the example shown, cement and aggregate.

Apparatus 1 comprises a substantially cylindrical tank 2, which has a substantially vertical longitudinal axis 3, opens outwards at ground level S, and has a known stirring device not shown; and a separating unit 4 over tank 2.

Unit 4 comprises a supporting base 5, in turn comprising two parallel longitudinal members 6 (only one shown in Figures 1 and 2) extending over tank 2 in a substantially horizontal direction 7 crosswise to axis 3, and fixed to a peripheral edge of tank 2.

Unit 4 also comprises a vessel 8, which has a substantially U-shaped cross section, is located between longitudinal members 6, and is fitted to longitudinal members 6 with the interposition of a number of shock-absorbing springs 9 substantially parallel to axis 3 - in the example shown, three springs 9 interposed between vessel 8 and one of longitudinal members 6, and three springs 9 interposed between vessel 8 and the other longitudinal member 6.

Vessel 8 comprises two lateral walls 10 (only one shown in Figures 1 and 2) substantially parallel to each other and to direction 7; and a substantially flat bottom wall 11 extending between walls 10 and in a direction 12 forming with direction 7 an angle a (Figure 3) of other than 0° and 90°, and preferably, though not necessarily, ranging between 6° and 12°. Wall 11 is defined at least partly by a filtering element 13 made of polyurethane and having a number of openings 14 formed through wall 11.

Vessel 8 also comprises a bottom end 15 closed outwards in direction 12 by a wall (not shown) substantially perpendicular to walls 10 and 11; and a top end 16 open outwards in direction 12.

Unit 4 also comprises an actuating device 17 for imparting to vessel 8, and therefore to filtering element 13, a vibratory movement in a direction 18 forming with direction 12 an angle b (Figure 3) of other than 0° and 90°, and preferably, though not necessarily, of 35°. Device 17 comprises a tubular supporting body 19 extending between walls 10, and supporting two known counter-rotating power vibrators 20 (only one shown in Figures 1 and 2) for exerting on vessel 8 a force F1 in direction 18, and two equal forces (not shown) opposite to each other in a direction perpendicular to the Figure 1 and 2 plane.

In actual use, the concrete is unloaded, e.g. from a mixer truck 21, into bottom end 15 of vessel 8, and is fed in direction 12 and along element 13 by the vibration imparted to vessel 8 by power vibrators 20. As shown in Figure 3, element 13 exerts on the concrete inside vessel 8 a reaction force F2, which is equal and opposite to force F1, and comprises a component R1 parallel to direction 12, and a component R2 perpendicular to element 13, so that the concrete is fed along element 13 along a substantially "saw-tooth" trajectory 22.

As the concrete is fed in direction 12 and along element 13:
the water and part of the solid-phase components, i.e. cement and relatively small-size aggregate, are filtered through element 13 and collected in tank 2;
the relatively large-size aggregate is fed in direction 12 to top end 16 of vessel 8 where it is unloaded from vessel 8;
the thickness of the layer of concrete inside vessel 8 is selectively controlled by a regulating member 23 comprising a flat plate 24, which extends between walls 10, perpendicularly to element 13, and is movable to and from element 13; and
the concrete is washed by a number of spray nozzles 25 fitted inside vessel 8.

Apparatus 1 is therefore relatively cheap and easy to produce, requires relatively little maintenance, and has a relatively high output rate.

## Claims

1. An apparatus for separating concrete components, the apparatus being **characterized by** comprising a substantially flat filtering element (13) extending in a given first direction (12) and having a number of openings (14) for filtering first liquid-phase components and second solid-phase components; and actuating means (17) for imparting to said filtering element (13) a vibratory movement in a given second direction (18); said first and said second direction (12, 18) forming a first angle (b) of other than 0° and 90°, so as to feed the third solid-phase components in said first direction (12) and along the filtering element (13).

2. An apparatus as claimed in Claim 1, wherein said first direction (12) forms with the ground a second angle (a) ranging between 0° and 90°.

3. An apparatus as claimed in Claim 2, wherein said second angle (a) ranges between 6° and 12°.

4. An apparatus as claimed in any one of the foregoing Claims, wherein said first angle (b) is substantially 35°.

5. An apparatus as claimed in any one of the foregoing Claims, and also comprising supporting means (5) for supporting said filtering element (13); and shock-absorbing means (9) interposed between the filtering element (13) and the supporting means (5).

6. An apparatus as claimed in Claim 5, wherein said shock-absorbing means (9) are elastic shock-absorbing means.

7. An apparatus as claimed in any one of the foregoing Claims, and also comprising a tank (2) located beneath said filtering element (13) and for collecting said first and second components.

8. An apparatus as claimed in any one of the foregoing Claims, and also comprising a number of spray nozzles (25) for washing the concrete as the concrete is fed along the filtering element (13) and in said first direction (12) .

9. An apparatus as claimed in any one of the foregoing Claims, and also comprising at least one regulating member (23) movable to and from said filtering element (13) to selectively control a thickness of the layer of concrete fed in said first direction (12) and along the filtering element (13).

10. An apparatus as claimed in any one of the foregoing Claims, and also comprising a vessel (8) which extends in said first direction (12), has a substantially U-shaped cross section, and has a bottom wall (11) defined at least partly by said filtering element (13).
